Europäisches Patentamt

European Patent Office

Office européen des brevets

(11) Publication number: **0 260 158**
A2

# (12) EUROPEAN PATENT APPLICATION

(21) Application number: **87308860.3**

(22) Date of filing: **06.10.87**

(51) Int. Cl.³: **A 01 D 34/73**

(30) Priority: **23.01.87 US 6431**

(43) Date of publication of application:
**16.03.88 Bulletin 88/11**

(84) Designated Contracting States:
**AT BE CH DE ES FR GB GR IT LI LU NL SE**

(71) Applicant: **BLOUNT, INC.**
**5550 S.W. Macadam Avenue**
**Portland Oregon 97201(US)**

(72) Inventor: **Mickelson, Raymond N.**
**3120 S.E. Vineyard Road**
**Milwaukie Oregon(US)**

(74) Representative: **Jones, Ian et al,**
**POLLAK MERCER & TENCH High Holborn House 52-54**
**High Holborn**
**London WC1V 6RY(GB)**

(54) **Cutting line for rotating string cutter devices.**

(57) A line (22;50;60;70) for a rotating trimmer device or other rotating cutter has a plurality of sharp edges (24,26,28,30, 32,34; 50a-50f) extending longitudinally thereof and spaced circumferentially from each other, with remainder portions (42;52), between adjacent edges, depressed. Such line presents only sharpened edges to the material to be cut.

FIG. I

Croydon Printing Company Ltd.

EP 0 260 158 A2

0260158

CUTTING LINE FOR ROTATING STRING CUTTER DEVICES

DESCRIPTION

This invention relates to cutting line for rotating string cutter devices, such as string trimmer devices or lawn mowers.

Rotating string trimmer devices, which have been on the market for several years, comprise a motor driven rotary head from which a length of flexible line extends outwardly for cutting grass, vines, etc. The length of the line extending outwardly from the rotating head is held substantially straight by centrifugal force and is able to cut grass, vines, etc., as it is swung in an arc by the rotating head.

The line used in such string trimmer devices is most frequently circular in cross-section. Since the line engages the material to be cut with a round cylindrical surface it does not provide highly efficient cutting.

U.S. Patent 4,186,239 (Mize, et al.) discloses in one embodiment a somewhat cross-shaped cross-section for a string trimmer line. However, the ends of the lobes of the cross-sectional shape are rounded, so the workpiece is again engaged by rounded surface.

U.S. Patent 4,118,865 (Jacyno, et al.) illustrates as one embodiment a line with a triangular cross-section. The regions between the edges of the line are flat and thus it is possible for a flat portion of the line to engage the material to be cut so that the most efficient cutting is not provided.

The present invention accordingly provides a line for a rotating string cutter device, the line having elongate sharp edges separated by depressed regions. This configuration ensures that one or more of the sharp edges will always be the first portion of the line to engage a member to be cut.

Regardless of the orientation of the line, when it strikes the workpiece, a sharp edge will engage it first, so the invention provides a cutter line which provides improved cutting characteristics and yet which can be inexpensively produced.

The line makes clearer cuts through work pieces, and through this improved cutting, it takes less effort to operate and thus does not place as great a load on the motor of the cutter or trimmer device as has prior cutter line.

By means of its sharper cutting edges, cutting line of this invention provides cleaner cuts. This is a benefit when grass is being cut since there will be fewer ragged grass ends, which tend to turn brown after cutting. Also, ragged edges provide points of entry for disease.

Besides having the capability of producing improved cutting, the line of present invention can be wound on a spool for convenient storage and mounting on the head of a string trimmer device.

The invention is further described below, by way of example, with reference to the accompanying drawings, in which:

Fig. 1 is a perspective view of a form of string trimmer device on which line according to the present invention may be used;

Fig. 2 is a perspective end view on a larger scale of a portion of a first form of line embodying the invention;

Fig. 3 is an end view on a still larger scale of the line shown in Fig. 2; and

Figs. 4, 5 and 6 are end views of second, third and fourth forms of line embodying the invention.

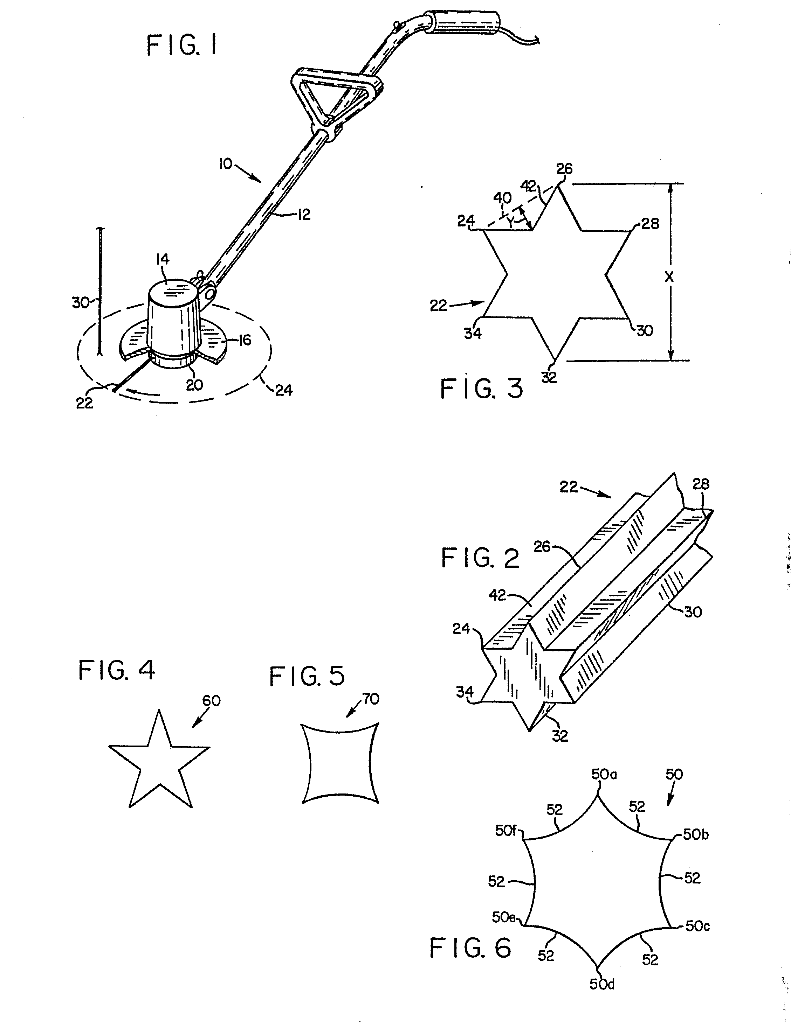

At 10 in Fig. 1 is illustrated a known string trimming device having an elongate handle 12 and a motor 14 mounted adjacent the lower end of the handle. A circular protective shroud 16 is secured to the underside of the motor 14, a portion of the shroud being shown as broken away.

Under the shroud 16, and mounted on the depending rotary shaft of motor 14 is a spool hub, or head, 20 which carries a length of flexible string trimmer line 22, a portion of which is shown projecting outwardly from the hub.

As the motor 14 is operated, the hub 20 rotates at great speed. The outwardly projecting portion of the line 22 is swung in a circle indicated by dashed line 24, so that it will contact and cut grass 30 or other material in its path.

Figs. 2 and 3 show the line 22 in greater detail. The line 22 comprises an elongate element formed of a flexible plastics material which has a plurality of elongate substantially sharp edges 24, 26, 28, 30, 32 and 34 extending longitudinally therealong. As can be seen from the drawings, these sharp edges are substantially equally spaced-apart circumferentially about the periphery of the line 22.

In Fig. 3 an imaginary straight line 40 is shown between adjacent edges, or the tips of adjacent edges, 24 and 26. The surface region 42 of the line between these adjacent edges 24 and 26 is formed as a V-shape depression, lying inwardly from the line 40. Such depressed regions are formed between each of the adjacent pairs of edges, or tips, about the periphery of the line 22.

Because the sharpened edges 24,26,28,30,32 & 34 are spaced circumferentially about the periphery of the line 22 and the regions 42 intermediate the edges are depressed, there is no way, when the line is in operation, that any portion of the line other than a sharpened edge can initially contact a workpiece to be cut.

With reference still to Fig. 3, examplary dimensions for the line 22 will be described. The maximum side-to-side dimension "X" of the line for normal string trimmers may be in a range of .1 to .39 cm. (.040 to .155 inch). With the configuration illustrated in Fig. 3 depression "Y" would be in a range of .008 to .056 cm. (.003 to .022 inch). The line of the invention also may be used for other rotating cutters, such as lawn mowers, which could have a dimension "X" in excess of .39 cm. (.155 inch).

Since such line frequently may be wound on a spool for use in a string trimmer, it is preferable for the line to be made of a plastics material with a flexural modulus in a range of 241,318,000 to 2,757,920,000 Pascals (35,000 to 400,000 psi). This, in conjunction with the examplary dimensions noted above will allow the trimmer line to be wound on spools or hubs having a diameter down to 3.8 cm. (1.5 inch).

Fig. 6 is an end view of another six-edged line 50 according to the invention. Although this line 50 has six substantially sharp edges 50a, 50b, 50c, 50d, 50e, 50f, as in the embodiment of Figs. 2 and 3, here the regions 52 between adjacent edges do not take a shallow V-shaped configuration but are substantially rounded, or concave, as shown.

In Fig. 4, a 5-pointed, generally star-shaped line 60 is illustrated in cross-section as a further embodiment of a line according to the invention.

Fig. 5 illustrates yet another embodiment of the invention, in a line 70 which has four elongate substantially sharp edges with rounded intermediate concavities between adjacent edges.

A line of the invention is mounted for use on the rotating hub 20 so as to be spun in a circular arc as illustrated in Fig. 1. As the line engages a workpiece, such as grass 30, a sharpened edge of the line will always be the first part of the line to contact the workpiece. This is a consequence of the number of the sharp edges arranged about the periphery of the line and the depressions, or concavities, between adjacent sharpened edges. With a sharp edge always the first part of the line to contact a workpiece, efficient and effective cutting will occur.

While preferred embodiments of the invention have been illustrated and described herein, it will be apparent to those skilled in the art that modifications may be made within the scope of the following claims.

CLAIMS

1. A line for a rotating string cutter device, the line (22;50;60;70) having elongate sharp edges (24,26,28,30,32,34; 50a-50f) separated by depressed regions (42,52).

2. A line for a rotating string trimmer or other rotating cutter device, the line (22;50;60;70) comprising an elongate flexible element having a plurality of substantially sharp edges (24,26,28,30,32,34; 50a-50f) extending longitudinally thereof and spaced circumferentially from each other, with regions (42;52) of the element between adjacent edges depressed and lying inwardly from a straight line (40) extending from the tip of one sharp edge to the tip of an adjacent sharp edge.

3. A line as claimed in claim 1 or 2 wherein the regions (52) between adjacent edges (50a-50f) are substantially concave.

4. A line as claimed in claim 1 or 2 wherein the regions (42) between adjacent edges (24,26,28,30,32,34) are V-shaped depressions.

5. A line as claimed in claim 4 wherein the maximum depth of the depressions is in the range of 0.008 to 0.056 cm. (0.003 to 0.022 inch).

6. A line as claimed in claim 4 or 5 wherein the line (22,60) has a five or six pointed star-shaped configuration.

7. A line as claimed in any one of claims 1 to 5 having at least four sharp edges (24,26,28,30,32,34; 50a-50f).

8. A line as claimed in claim 7 having a maximum of ten sharp edges (24,26,28,30,32,34; 50a-50f).

9. A line as claimed in any preceding claim wherein the sharp edges (24,26,28,30,32,34; 50a-50f) are substantially equally spaced about the flexible element.

10. A line as claimed in any preceding claim having a side-to-side outer dimension in a range of from .1 to .39 cm. (.040 to .155 inch).

11. A line as claimed in any preceding claim wherein the flexible element has sufficient flexibility for it to be capable of being wound onto and generally to remain in a wound position on a spool with a minimum diameter of 3.8 cm. (1.5 inches).

12. A line as claimed in any one of claims 1 to 10 having a flexural modulus in a range of from 241,318,000 to 2,757,920,000 Pascals (35,000 psi to 400,000 psi).

FIG. I

10

12

14

30

16

20

22

24

FIG. 3

26

42

40

24

28

22

34

30

32

X

FIG. 2

22

28

26

42

24

34

32

30

FIG. 4

60

FIG. 5

70

50a

50

52

52

50f

50b

52

52

50e

50c

52

52

FIG. 6

50d